# EUROPEAN PATENT APPLICATION

(11) **EP 0 714 698 A2**
(43) Date of publication of application: **05.06.1996**
(21) Application number: 95203441.1
(22) Date of filing: 01.12.1995
(51) Int. Cl.: B01J 32/00, C22C 38/22, C22C 38/26, F01N 3/28

(54) **High temperature combustion catalyst**

(30) Priority: 02.12.1994 JP 329617/94
(71) Applicant: Tanaka Kikinzoku Kogyo K.K., Chuo-ku Tokyo (JP)
(72) Inventor: Yamamoto, Toshiya, Tanaka Kikinzoku Kogyo, Hiratsuka-shi, Kanagawa (JP); Sasaki, Masahiro, Tanaka Kikinzoku Kogyo, Hiratsuka-shi, Kanagawa (JP); Shimizu, Kazuo, Tanaka Kikinzoku Kogyo K.K., Chuo-ku, Tokyo (JP)
(74) Representative: Pellegri, Alberto

(57) **Abstract**

Disclosed herein is a high temperature combustion catalyst which comprises a stainless support containing 7 to 13 % in weight of aluminum and 0.01 to 2 % in weight of one or more metals selected from molybdenum. tungsten and niobium, and catalyst material loaded on the stainless support. In a conventional high temperature combustion catalyst prepared by loading catalyst material on a stainless support containing aluminum, the high temperature resistance does not reach to a completely satisfactory level so that the surface may be oxidized under severe conditions resulting in the deactivation. The aluminum and the molybdenum or the like of this invention form a protection film having a sufficient thickness on the surface of the metal support for protecting the metal support to obtain a longer life.

## Description

### Background of the invention

The present invention relates to a high temperature combustion catalyst which possesses a ferrite-based stainless support, and more particularly to a high temperature combustion catalyst which possesses a ferrite-based stainless having durabilities against rapid heating and cooling and a practical life.

In a conventional catalyst combustion system in which a mixture of a fuel and air is combusted in such a combustor as a gas turbine employing a catalyst, a ceramics honeycomb member has been employed as a support retaining the catalyst. Ferrite-based stainless steel containing a low amount of aluminum may be sometimes employed as a catalyst for an automobile exhausted gas.

The ceramics honeycomb member may have a large risk of being damaged by means of thermal stress produced by the repeated rapid heating and cooling. Although the above ferrite-based stainless steel containing the low amount of aluminum possesses the durability against the repeated rapid heating and cooling, its oxidation resistance is too small to have a practical life.

It is supposed that the aluminum content of the stainless steel employed as a conventional metal support for a catalyst is around 5 % so that the protection effect of the stainless steel produced by this aluminum content or the thickness of the aluminum film on the stainless steel surface, especially on the surface of such a catalyst as an automobile catalyst to which the repeated rapid heating and cooling are applied, may be reduced to an insufficient level in a relatively short period of time to invite the large lowering of the catalytic action or to invite the deactivation. Accordingly, the present inventors have invented a high temperature combustion catalyst in which the durability of the above metal support in high temperatures is improved by increasing the aluminum content (Japanese patent application No.5-294767).

Although the life of this high temperature combustion catalyst is remarkably longer than that of a previous catalyst, it is not yet satisfactory under severe conditions so that a high temperature combustion catalyst including a metal support for a catalyst having a further long life is demanded.

### Summary of the Invention

An object of the present invention is, in view of the above problems, to provide a high temperature combustion catalyst in which no damage is produced by the repeated rapid heating and cooling and the deterioration is seldom produced even in a relatively long period of time.

The present invention is a high temperature combustion catalyst which comprises a stainless support containing 7 to 13 % in weight of aluminum and 0.01 to 2 % in weight of one or more metals selected from molybdenum, tungsten and niobium, and catalyst material loaded on the stainless support.

Since, in the high temperature combustion catalyst in accordance with the present invention, the aluminum content of the stainless steel of the metal support is elevated compared with that of a conventional catalyst and further one or more metals selected from molybdenum, tungsten and niobium are contained which form the firm and compact protection film having a sufficient thickness on the surface of the metal support for protecting the metal support, the deterioration of the said support is difficult to proceed. When a catalyst prepared by loading a catalyst metal on the above support is employed in a severe combustion reaction in which the heating and the cooling are repeated, the sufficiently practicable lives can be obtained, from 10,000 hours upto 25,000 hours in case of the tungsten and the niobium and from 20,000 hours upto near 40,000 hours in case of the molybdenum.

Accordingly, by improving, in accordance with the present invention, the conventional catalyst which did not possess the satisfactory life, the catalyst may be employed in a reaction to be conducted at a higher temperature so that the employment range of the catalyst may be extended.

### Brief Description of the Drawing

Fig.1 is a graph showing the changes on time of a catalyst inlet temperature and of a catalyst outlet temperature in Example 1 and Comparative Example 1.

Fig.2 is a graph showing the changes on time of weights of the respective samples of Example 2.

Fig.3 is a graph showing the changes on time of weights of the respective samples of Comparative Example 2.

Fig.4 is a graph showing the changes on time of catalyst inlet temperatures and of catalyst outlet temperatures in Example 3, Example 4 and Comparative Example 1.

Fig.5 is a graph showing the changes on time of weights of the respective samples of Example 5.

### Detailed Description of the Invention

Although the initial durability of the conventional ferrite-based stainless steel support containing the aluminum against the high temperature combustion is relatively excellent. rapid oxidation of the surface occurs in a relatively short period of time to result in the deactivation. The present inventors have found that, upon the pursuit of a cause of the abnormal oxidation, the aluminum in the stainless steel forms a compact alumina (Al₂0₃) layer on the stainless steel surface under the high temperature oxidation circumstance to depress the oxidation of the stainless steel, but the abnormal oxidation occurs because the aluminum content is small to deplete the aluminum.

In order to prevent the depletion of the aluminum, it is of course insufficient to make the aluminum content in the stainless steel to be around 5 %, a conventional standard value, and the extension of the life does not reach to the practical value so that the aluminum content is required to be at least 7 %. Although it is preferable to elevate the aluminum content to increase the film thickness for protecting the support, the excessive increase of the aluminum content invites the lowering of the mechanical strength of the support itself to conversely shorten the life and lower the activity. Its critical value is around 13 % so that the aluminum content of the high temperature combustion catalyst of the present invention is between 7 and 13 % in weight of the whole metal support.

The stainless steel itself containing such an amount of aluminum possesses a nearly practical life. If one or more metals selected from molybdenum, tungsten and niobium are contained therein, the oxidative film produced by means of a synergistic effect between the aluminum and the molybdenum and the like is made to be more compact and more firm so that the abnormal oxidation is more difficult to occur.

The content of the above molybdenum or the like is required to be at least 0.01 % in weight because the effect of making the oxidative film compact is not expected below 0.01 %. Although, however, the content of the molybdenum or the like is too large for expecting the effect of further compacting and firming the oxidative film, the mechanical strength of the support itself is decreased so that the content of the molybdenum or the like is required to be 2 % or less.

The aluminum content and the content of the molybdenum or the like of the stainless steel employed in the present invention may be controlled by means of the mixing ratio of the respective metals at the time of preparing the alloy for the stainless steel so that the stainless steel having the desired alloy ratio can be easily prepared.

The high temperature combustion catalyst of the present invention can be prepared by employing the said stainless steel as the metal support and loading a catalyst metal on the metal support. The kind of the catalyst metal and the temperature may be suitably selected depending on the kind of a combustion gas and the like, and the above catalyst metal can be loaded in accordance with a conventional method such as a thermal decomposition method.

Although the temperature range for employing the high temperature combustion catalyst in accordance with the present invention is not especially restricted, a conventional combustion catalyst is preferably employed at 800 °C or more wherein the deterioration of the metal support is likely to occur.

The extensions of the life of the high temperature combustion catalyst of the present invention compared with the life of the conventional catalyst reach upto 10,000 to 24,000 hours depending on the temperature employed in case of containing the aluminum and tungsten and/or niobium, and reach upto 20,000 to 40,000 hours depending on the temperature employed in case of containing the aluminum and molybdenum so that the large effects may be attained by means of an inexpensive and easy means.

### Examples

Although examples in connection with the preparation of and the measurement of the life of the high temperature combustion catalyst of the present invention will be described, these Examples are not construed to restrict the scope of the invention.

### Example 1

A three stage combustor the respective stages of which contained the following catalysts were prepared as follows.

Corrugated stainless foils made of an alloy of iron (68%) - chromium (20 %) - aluminum (11 %) - molybdenum (1%) were wound at 300 CPSi placing a flat plate therebetween to prepare a metal support foil having a wave-like surface shape. The metal support was loaded with 5 mg/cm² of active alumina and 1.5 mg/cm² of platinum and was thermally treated at 1050 °C for eight hours to make a third stage containing a catalyst having a diameter of 1 inch.

A first stage of which a catalyst is palladium having the same shape as that of the third stage was formed by applying a nitric acid solution of Pd(NH₃)₂(N0₂)₂ to corrugated zirconia.

A second stage having the same shape as that of the third stage was formed by spraying a toluene solution of palladium 2-ethylhexanoic acid to a corrugated iron-chromium-aluminum alloy already sprayed with a zirconia suspension followed by drying.

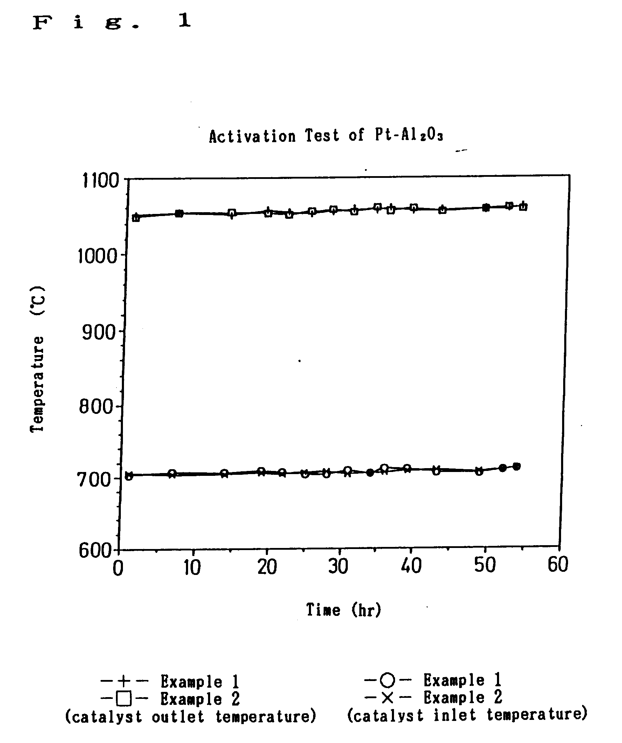

These catalysts were accommodated in a combustor consisting in turn of the first stage, the second stage and the third stage from an inlet of a mixed gas containing a fuel and air, a catalyst inlet temperature of the first stage was set to be 390 °C and the mixed gas of methane and the air (F/A = 0.028) was supplied to the inlet at 8 m/sec. The combustion was continued in this situation, and the changes on time of the inlet temperature and of the outlet temperature of the third stage catalyst after the initiation of the supply were shown in Fig.1. Fig.1 shows that the catalyst inlet temperature of the third stage was maintained nearly constant at 705 °C and the catalyst outlet temperature was maintained nearly constant at 1050 °C.

### Comparative Example 1

The combustion of the mixed gas of the methane and the air was conducted under the same conditions as those of Example 1 except that an iron (69%)-chromium (20 %) - aluminum (11 %) alloy was employed as the metal support of the third stage catalyst, and the changes on time of the inlet temperature and of the outlet temperature of the third stage catalyst after the initiation of the supply were shown in Fig.1. Fig.1 shows that also in this Comparative Example similar to Example 1, the catalyst inlet temperature of the third stage was maintained nearly constant at 705 °C and the catalyst outlet temperature was maintained nearly constant at 1050 °C, and the combustion temperature was not affected by the aluminum content.

### Example 2

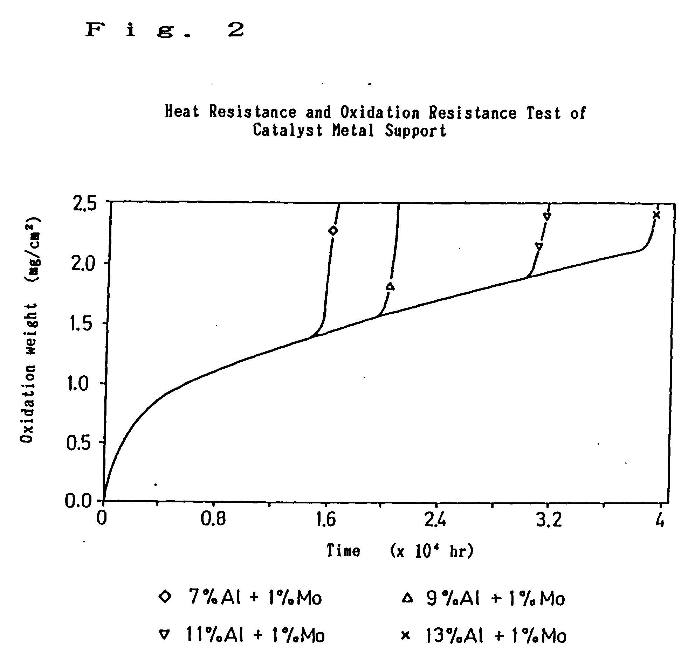

After four kinds of metal supports having the same shapes as that of the metal support of Example 1 of which contents of aluminum which loaded no active alumina and no platinum were 7 % (sample 1), 9 % (sample 2), 11% (sample 3) and 13 % (sample 4) all having 1 % of molybdenum were placed in an electric furnace maintained at 1050 °C, the samples were taken out once a day so that a heat resistance and oxidation resistance test was conducted by measuring weight changes due to the oxidation. Fig.2 shows the relation between the time and the weight change of the respective samples of this test. In this figure, the point of abrupt weight increase was defined to be a life of the metal support.

It is apparent from Fig.2 that the sample 1 (containing 7 % of aluminum and 1 % of molybdenum), the sample 2 (containing 9 % of aluminum and 1 % of molybdenum), the sample 3 (containing 11 % of aluminum and 1 % of molybdenum) and the sample 4 (containing 13 % of aluminum and 1 % of molybdenum) possessed the lives of about 15,000 hours, about 20,000 hours, about 31,000 hours and about 38,000 hours, respectively, so that all the samples possessed the practical lives for the high temperature combustion catalyst support.

### Comparative Example 2

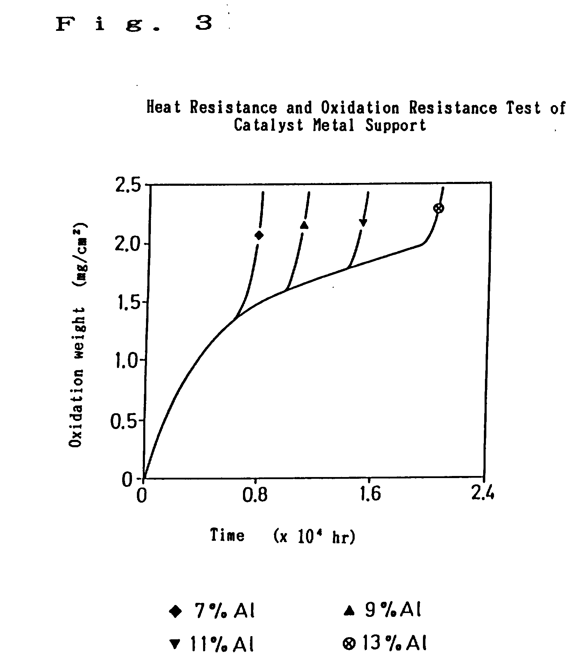

The same test as that of Example 2 was conducted employing metal supports of which aluminum contents were the same as those of Example 2 and containing no molybdenum so that the lives of the respective metal supports of which aluminum contents were 7 % (sample 5), 9 % (sample 6), 11 % (sample 7) and 13 % (sample 8) were measured. The results are shown in Fig.3.

Fig.3 shows that the sample 5, the sample 6, the sample 7 and the sample 8 possessed lives of only 8,000 hours, 12,000 hours, 16,000 hours and 19,000 hours, respectively.

### Example 3

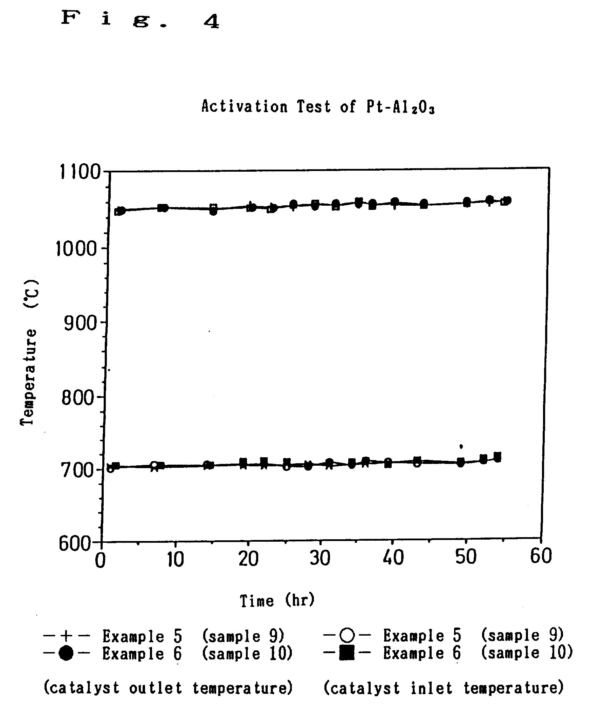

A catalyst was prepared under the same conditions as those of Example 1 except that an alloy of iron (68%) - chromium (20 %) - aluminum (11 %) - tungsten (1%) (sample 9) was employed as the alloy constituting the corrugated stainless foil, its life was measured and the changes on time of the inlet temperature and the outlet temperature of the third stage catalyst were shown in Fig.4. Fig.4 shows that the catalyst inlet temperature of the third stage was maintained nearly constant at about 705 °C and the catalyst outlet temperature was maintained nearly constant at about 1050 °C.

### Example 4

A catalyst was prepared under the same conditions as those of Example 1 except that an alloy of iron (68%) - chromium (20 %) - aluminum (11 %) - niobium (1%) (sample 10) was employed as the alloy constituting the corrugated stainless foil, its life was measured and the changes on time of the inlet temperature and the outlet temperature of the third stage catalyst were shown in Fig.4. Fig.4 shows that the catalyst inlet temperature of the third stage was maintained nearly constant at about 705 °C and the catalyst outlet temperature was maintained nearly constant at about 1050 °C.

### Example 5

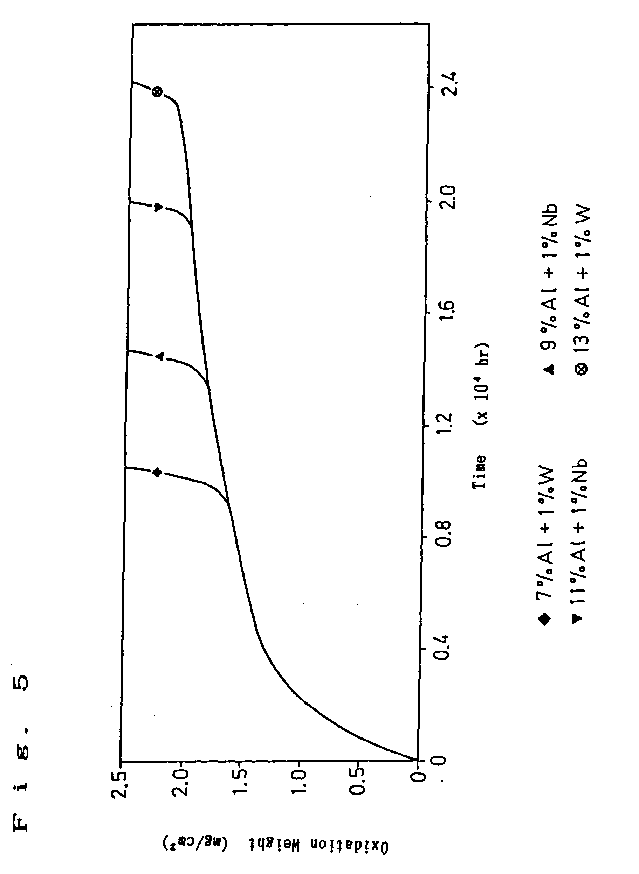

Four alloys of which contents of aluminum which loaded no active alumina and no platinum were 7 % (sample 11), 9 % (sample 12), 11% (sample 13) and 13 % (sample 14) with the samples 11 and 14 further containing 1 % of tungsten and the samples 12 and 13 further containing 1 % of niobium were placed in an electric furnace and treated under the same conditions as those of Example 1 so that a heat resistance and oxidation resistance test of the respective samples was conducted. Fig.5 shows the relation between the time lapsed and the weight change of the respective oxidations. In this figure, the point of abrupt weight increase was defined to be a life of the metal support.

It is apparent from Fig.5 that the sample 11 (containing 7 % of aluminum and 1 % of tungsten), the sample 12 (containing 9 % of aluminum and 1 % of niobium), the sample 13 (containing 11 % of aluminum and 1 % of niobium) and the sample 14 (containing 13 % of aluminum and 1 % of tungsten) possessed the lives of about 10,000 hours, about 14,000 hours, about 20,000 hours and about 24,000 hours, respectively, so that all the samples possessed the practical lives for the high temperature combustion catalyst support.

## Claims

1. A high temperature combustion catalyst which comprises a stainless support containing 7 to 13 % in weight of aluminum and 0.01 to 2 % in weight of one or more metals selected from molybdenum, tungsten and niobium, and catalyst material loaded on the stainless support.

2. A high temperature combustion catalyst which comprises a stainless support containing 7 to 13 % in weight of aluminum and 0.01 to 2 % in weight of molybdenum, and catalyst material loaded on the stainless support.
